# EUROPÄISCHE PATENTANMELDUNG

(11) **EP 4 434 403 A1**
(43) Veröffentlichungstag der Anmeldung: **25.09.2024**
(21) Anmeldenummer: 24163092.0
(22) Anmeldetag: 13.03.2024
(51) Int. Cl.: A47C 7/42, A47C 7/46, B60N 2/66

(54) **LORDOSEKISSEN UND VERFAHREN ZUR HERSTELLUNG EINES LORDOSEKISSENS**

(30) Priorität: 21.03.2023 DE 102023202530
(71) Anmelder: ContiTech Vibration Control GmbH, 30175 Hannover (DE)
(72) Erfinder: Wundersee, Robert, 30175 Hannover (DE); Thomalla, Robert, 30175 Hannover (DE)
(74) Vertreter: Continental Corporation

(57) **Zusammenfassung**

Die Erfindung betrifft ein Lordosekissen 1, umfassend eine Polsterfolie 10 und eine Trägerfolie 11, die miteinander unter Ausbildung mindestens einer ersten aufblasbaren Polsterkammer 12 und einer zweiten aufblasbaren Polsterkammer 14 und wenigstens eines die Polsterkammern 12, 14 beabstandenden Stegs 16 verschweißt sind, wobei die erste Polsterkammer 12 und die zweite Polsterkammer 14 jeweils mit einer in diese einmündenden Fluidleitung 13 verbunden sind. Der Steg 16 weist wenigstens eine in einer Querrichtung Y verlaufende Falz 18 auf, wobei das Lordosekissen 1 entlang der Falz 18 faltbar ist.

## Beschreibung

Die Erfindung betrifft ein Lordosekissen, umfassend eine Polsterfolie und eine Trägerfolie, die miteinander unter Ausbildung mindestens einer ersten aufblasbaren Polsterkammer und einer zweiten aufblasbaren Polsterkammer und wenigstens eines die Polsterkammern beabstandenden Stegs verschweißt sind, wobei die erste Polsterkammer und die zweite Polsterkammer jeweils mit einer in diese einmündenden Fluidleitung verbunden sind.

Die Erfindung betrifft zudem ein Verfahren zur Herstellung eines erfindungsgemäßen Lordosekissens.

Lordosekissen zum Aufblasen sind seit langem bekannt und vielfältig im Einsatz. Im Automobilbau finden Sie in den Fahrersitzen zur Verbesserung des Komforts oder zur Vermeidung von Müdigkeit Verwendung. Lordosekissen dienen dazu, die Kontur der Rückenlehne eines Sitzmöbels, beispielsweise eines Fahrzeugsitzes, an die jeweilige Anatomie einer auf dem Sitzmöbel sitzenden Person anzupassen. Die mindestens eine Polsterkammer wird dazu über die zugehörige Fluidleitung mehr oder weniger stark aufgeblasen.

Üblicherweise werden Lordosekissen aus zwei übereinandergelegten thermoplastischen Kunststofffolien durch Verschweißung miteinander hergestellt. Die miteinander zu verschweißenden Folien müssen zunächst durch Stanzen oder Schneiden vorkonfektioniert werden, um diese anschließend mit eingelegter Fluidleitung entlang einer Vielzahl von Schweißnähten luftdicht zu verschweißen. Damit erfordert die bislang übliche Herstellung nicht nur eine Vielzahl von Arbeitsschritten, sondern birgt aufgrund der Vielzahl der Schweißnähte auch die Gefahr von Undichtigkeiten, die unweigerlich einen Ausschuss des produzierten Lordosekissens nach sich ziehen. Bei der Herstellung von Lordosekissen aus Folienabschnitten sind darüber hinaus der ergonomischen Formgestaltung der Polsterkammern unerwünscht große Limitierungen auferlegt.

Bekannte Verfahren zur Herstellung von Lordosekissen erfordern einerseits viele einzelne Prozessschritte, andererseits sind die Lordosekissen zunächst rein flächig ausgebildet und erlangen erst durch das Aufblasen an ihrem vorgesehenen Einbauort eine dreidimensionale Form.

In der DE 10 2006 059 540 A1 ist ein Fahrzeugsitz mit Lordosekissen offenbart, bei dem das Lordosekissen eine Einschnürung aufweist. Diese Einschnürung führt dazu, dass im Bereich der Einschnürung beim Aufblasen des Lordosekissens die Einschnürung eine geringere Ausdehnung erfährt als der Kissenbereich außerhalb der Einschnürung.

Bei dieser Lösung erfährt das Lordosekissen seine gewünschte dreidimensionale Form erst beim Aufblasen, da auch hier eine flächige Grundkonstruktion vorliegt.

Die DE 10 2016 220 104 A1 offenbart ein Lordosekissen, dessen Ausdehnungsfähigkeit jedoch durch die elastische Maximaldehnung der verwendeten Folien begrenzt ist. Außerdem nehmen die Polsterkammern bei größerer Ausdehnung eine annähernd kugelförmige Gestalt an, was für die Unterstützung des Rückens im Lordosebereich ungünstig ist. Es wird daher durch Anordnung mehrerer übereinander angeordneter Polsterkammern versucht, die erreichbare Konturierung zu optimieren.

Die Anordnung mehrerer einzelner Polsterkammern erhöht nachteiliger Weise den Montageaufwand und damit einhergehend zusätzlich die Herstellungskosten.

Der Erfindung liegt die Aufgabe zugrunde, ein Lordosekissen mit verbesserter Konturierung sowie ein Verfahren zur Herstellung desselben bereitzustellen, wobei die Nachteile des Standes der Technik überwunden werden sollen. Insbesondere soll der Montageaufwand des Lordosekissens reduziert werden, um die Herstellkosten geringhalten zu können.

Die Lösung dieser Aufgabe ergibt sich durch ein Lordosekissen mit den Merkmalen des unabhängigen Anspruchs 1.

Eine weitere Lösung der gestellten Aufgabe ergibt sich durch ein Verfahren zur Herstellung eines solchen Lordosekissens mit den Merkmalen des unabhängigen Anspruchs 6.

Weitere vorteilhafte Ausbildungen sind in den abhängigen Ansprüchen offenbart und der allgemeinen Beschreibung sowie den Ausführungsbeispielen zu entnehmen.

Die vorliegende Anmeldung betrifft ein Lordosekissen, umfassend eine Polsterfolie und eine Trägerfolie, die miteinander unter Ausbildung mindestens einer ersten aufblasbaren Polsterkammer und einer zweiten aufblasbaren Polsterkammer und wenigstens eines die Polsterkammern beabstandenden Stegs verschweißt sind, wobei die erste Polsterkammer und die zweite Polsterkammer jeweils mit einer in diese einmündenden Fluidleitung verbunden sind. Der Steg weist wenigstens eine in einer Querrichtung verlaufende Falz auf, wobei das Lordosekissen entlang der Falz faltbar ist.

So können die erste Polsterkammer und die zweite Polsterkammer einander zumindest teilweise oder vollständig überlappend angeordnet sein.

Der Steg bildet einen nicht aufblasbaren Teil des Lordosekissens und verbindet mit anderen Worten die Polsterkammern miteinander zu einem Lordosekissen mit mehreren Polsterkammern. Besonders bevorzugt weist das Lordosekissen drei oder mehr Polsterkammern auf, wobei die erste Polsterkammer und die zweite Polsterkammer, sowie die zweite Polsterkammer und die dritte Polsterkammer jeweils durch einen Steg voneinander beabstandet sind. Die Polsterkammern können zumindest teilweise in die Polsterfolie eingeformt sein.

Die Falz sorgt mit anderen Worten für einen Steifigkeitssprung in dem Steg, sodass das Lordosekissen entlang der Falz auf sich selbst gefaltet, umgeschlagen oder geknickt werden kann. Die Falz kann so in dem Steg positioniert sein, dass die Polsterkammern im zusammengefalteten Zustand sich zumindest teilweise oder vollständig überlappen. Hierdurch kann auf vorteilhafte Weise der Hub des Lordosekissens vergrößert werden, wodurch der Komfort gesteigert werden kann. So kann z. B. bei der Verwendung des Lordosekissens für eine Massagefunktion in einem Sitz die Intensität der Massagefunktion gesteigert werden. Durch das einfache Zusammenfalten des Lordosekissens können mehrere Polsterkammern zumindest teilweise übereinander angeordnet werden, wodurch eine aufwendige und zeitintensive Montage und Ausrichtung einzelner Lordosekissen mit nur einer Polsterkammer zueinander zu einer vergleichbaren Anordnung mehrerer Polsterkammern übereinander vermieden werden kann.

Gemäß einem weiteren Aspekt der vorliegenden Erfindung weist der Steg zwei in Querrichtung verlaufende Falzen auf.

Auf vorteilhafte Weise kann hierdurch die Orientierung bzw. Ausrichtung der Polsterkammern im zusammengefalteten Zustand des Lordosekissens identisch mit dem ursprünglichen Zustand vor dem Zusammenfalten beibehalten werden. Mit anderen Worten ist im zusammengefalteten Zustand der Steg, welcher die erste Polsterkammer mit der zweiten Polsterkammer verbindet, auf der Oberfläche bzw. der Oberseite der ersten Polsterkammer angeordnet. Die zweite Polsterkammer ist im zusammengefalteten Zustand mit der Unterseite auf dem Steg angeordneFt, welcher die erste Polsterkammer mit der zweiten Polsterkammer verbindet. Der Steg, welcher die zweite Polsterkammer mit der dritten Polsterkammer verbindet, ist auf der Oberfläche bzw. der Oberseite der zweiten Polsterkammer angeordnet. Die dritte Polsterkammer ist im zusammengefalteten Zustand mit der Unterseite auf dem Steg angeordnet, welcher die zweite Polsterkammer mit der dritten Polsterkammer verbindet. Mit anderen Worten ist die Hubrichtung der Polsterkammern im zusammengefalteten Zustand des Lordosekissens gleichgerichtet.

Gemäß einem weiteren Aspekt der vorliegenden Erfindung ist die Polsterfolie und bzw. oder die Trägerfolie aus einer in einem Spritzgussverfahren dreidimensional geformten Kunststofffolie gebildet. Auf besonders vorteilhafte Weise ist das solchermaßen gebildete Lordosekissen in einem Grund- bzw. Ruhezustand nicht mehr nur flächig ausgebildet, sondern bereits in einer vorteilhaften Formgestaltung dreidimensional vorgeformt. Auf diese Weise kann nicht nur die Größe und Anordnung der Polsterkammern durch entsprechende dreidimensionale Formung der Polsterfolie vorgegeben werden, sondern es kann eine Polsterkammer durch eine entsprechende dreidimensionale Geometrie der Polsterfolie vorgegeben werden, die unter ergonomischen Gesichtspunkten gestaltet ist und bzw. oder an den jeweiligen Sitztyp und bzw. oder Nutzer angepasst ist, sodass auch individuelle Geometrien umsetzbar sind.

Gemäß einem weiteren Aspekt der vorliegenden Erfindung weist die Polsterfolie eine dreidimensional strukturierte Oberfläche auf. Die Oberfläche kann beispielsweise noppen- oder riffelartige Erhebungen aufweisen, um den Komfort zu steigern und auch eine etwaige in den Sitz integrierte Massagefunktion zu unterstützen.

Gemäß einem weiteren Aspekt der vorliegenden Erfindung weist das Lordosekissen entlang der Falz eine Perforation oder eine Materialanhäufung auf. Die Perforation oder die Materialanhäufung führen zu einer Veränderung der Steifigkeit des Stegs und bilden eine Sollknickstelle, um die das Lordosekissen entlang der Materialanhäufung auf sich selbst gefaltet, umgeschlagen oder geknickt werden kann.

Die Perforation führt zu einer Schwächung bzw. zu einer Verringerung der Steifigkeit des Stegs. Die Materialanhäufung kann beispielsweise eine in einem Spritzgussverfahren angespritzte und in Querrichtung des Lordosekissens verlaufende Rippe sein. Die Rippe erhöht die Steifigkeit des Stegs und kann als eine Art Scharnier fungieren.

Das erfindungsgemäße Lordosekissen kann in einer Vielzahl von Sitzmöglichkeiten oder Sitzmöbeln eingesetzt werden, zum Beispiel in Pkw und Lkw, Gabelstaplern, Baufahrzeugen, Agrarfahrzeugen, Pilotensitzen, Bürostühlen, Massagesesseln, Wohnlandschaften und Wartezimmern.

Die vorliegende Anmeldung betrifft außerdem ein Verfahren zur Herstellung eines erfindungsgemäßen Lordosekissens, gekennzeichnet durch die folgenden Verfahrensschritte:
a) Bereitstellen einer Polsterfolie und einer Trägerfolie,
b) Verschweißen der Polsterfolie und der Trägerfolie miteinander, unter Ausbildung mindestens einer ersten aufblasbaren Polsterkammer und einer zweiten aufblasbaren Polsterkammer und wenigstens eines die Polsterkammern beabstandenden Stegs, mit jeweils einer in die erste Polsterkammer und die zweite Polsterkammer einmündenden Fluidleitung,
c) Falten des Lordosekissens entlang wenigstens einer in einer Querrichtung verlaufenden Falz des Stegs,
c) Tempern des Lordosekissens.

Insbesondere kann die Polsterfolie durch die zur Herstellung eingesetzte Kunststoffspritztechnik so geformt werden, dass die erste Polsterkammer und bzw. oder die zweite Polsterkammer zumindest teilweise oder auch vollständig in die Polsterfolie eingeformt werden. Es können besonders bevorzugt auch drei oder mehr Polsterkammern in einem einzelnen Arbeitsgang bei Herstellung der Polsterfolie erzeugt werden. Auf diese Weise wird eine erhebliche Prozesszeit eingespart. Es versteht sich, dass die im Spritzgussverfahren dreidimensional zu der Polsterfolie geformte Kunststofffolie und auch die Trägerfolie aus miteinander verschweißbaren, vorzugsweise thermoplastischen Kunststoffen gebildet sind.

Durch das Falten des Lordosekissens entlang der wenigstens einen Falz können zumindest die erste Polsterkammer und die zweite Polsterkammer einander zumindest teilweise oder vollständig überlappend angeordnet sein.

Nach dem Verschweißen der Trägerfolie und der Polsterfolie unter Einschluss einer den Polsterkammern jeweils zugeordneten Fluidleitung wird das so gebildete Lordosekissen für einen definierten Zeitraum bei einer gegenüber der Raumtemperatur erhöhten, aber unterhalb der Schmelztemperatur der für die Polsterfolie und die Trägerfolie verwendeten Kunststoffe liegenden Temperatur getempert, um die gewünschte Einbauhöhe in den Sitz zu gewährleisten. Darüber hinaus besteht die Möglichkeit, nach dem Verschweißen der Trägerfolie und der Polsterfolie unter Einschluss der Fluidleitungen eine Inline-Prüfung auf eventuelle Undichtigkeiten der erstellten Schweißnähte durchzuführen, in dem die Polsterkammern des gebildeten Lordosekissens über die der jeweiligen Polsterkammer zugeordnete Fluidleitung mit Druck beaufschlagt werden können. Eventuell undichte Lordosekissen können unmittelbar automatisch aus dem Prozess ausgeschleust werden.

Gemäß einem weiteren Aspekt der vorliegenden Erfindung ist die Polsterfolie und bzw. oder die Trägerfolie aus einer im Spritzgussverfahren dreidimensional geformten Kunststofffolie gebildet. Auf besonders vorteilhafte Weise ist das erfindungsgemäße Lordosekissen im Grund- bzw. Ruhezustand nicht mehr nur flächig ausgebildet, sondern bereits in einer vorteilhaften Formgestaltung dreidimensional vorgeformt. Auf diese Weise kann nicht nur die Größe und Anordnung der Polsterkammern durch entsprechende dreidimensionale Formung der Polsterfolie vorgegeben werden, sondern es kann eine Polsterkammer durch eine entsprechende dreidimensionale Geometrie der Polsterfolie vorgegeben werden, die unter ergonomischen Gesichtspunkten gestaltet ist und bzw. oder an den jeweiligen Sitztyp und bzw. oder Nutzer angepasst ist, sodass auch individuelle Geometrien umsetzbar sind.

Gemäß einem weiteren Aspekt der vorliegenden Erfindung weist die Polsterfolie eine dreidimensional strukturierte Oberfläche auf. Die Oberfläche kann beispielsweise noppen- oder riffelartige Erhebungen aufweisen, um den Komfort zu steigern und auch eine etwaige in den Sitz integrierte Massagefunktion zu unterstützen.

Gemäß einem weiteren Aspekt der vorliegenden Erfindung weist der Steg zwei in Querrichtung verlaufende Falzen auf.

Auf vorteilhafte Weise kann hierdurch die Orientierung bzw. Ausrichtung der Polsterkammern im zusammengefalteten Zustand des Lordosekissens identisch mit dem ursprünglichen Zustand vor dem Zusammenfalten beibehalten werden. Mit anderen Worten ist im zusammengefalteten Zustand der Steg, welcher die erste Polsterkammer mit der zweiten Polsterkammer verbindet, auf der Oberfläche bzw. der Oberseite der ersten Polsterkammer angeordnet. Die zweite Polsterkammer ist im zusammengefalteten Zustand mit der Unterseite auf dem Steg angeordnet, welcher die erste Polsterkammer mit der zweiten Polsterkammer verbindet. Der Steg, welcher die zweite Polsterkammer mit der dritten Polsterkammer verbindet, ist auf der Oberfläche bzw. der Oberseite der zweiten Polsterkammer angeordnet. Die dritte Polsterkammer ist im zusammengefalteten Zustand mit der Unterseite auf dem Steg angeordnet, welcher die zweite Polsterkammer mit der dritten Polsterkammer verbindet. Mit anderen Worten ist die Hubrichtung der Polsterkammern im zusammengefalteten Zustand des Lordosekissens gleichgerichtet.

Gemäß einem weiteren Aspekt der vorliegenden Erfindung weist das Lordosekissen entlang der Falz eine Perforation oder eine Materialanhäufung auf. Die Perforation oder die Materialanhäufung führen zu einer Veränderung der Steifigkeit des Stegs und bilden eine Sollknickstelle, um die das Lordosekissen entlang der Perforation oder der Materialanhäufung auf sich selbst gefaltet, umgeschlagen oder geknickt werden kann.

Die Perforation führt zu einer Schwächung bzw. zu einer Verringerung der Steifigkeit des Stegs. Die Materialanhäufung kann beispielsweise eine in einem Spritzgussverfahren angespritzte und in Querrichtung des Lordosekissens verlaufende Rippe sein. Die Rippe erhöht die Steifigkeit des Stegs und kann als eine Art Scharnier fungieren.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder dem unabhängigen Anspruch 6 kombinierbar sind.

Ein Ausführungsbeispiel und weitere Vorteile der Erfindung werden nachstehend im Zusammenhang mit den folgenden Figuren schematisch dargestellt und näher erläutert. Darin zeigt:
Fig. 1 eine schematische Darstellung eines erfindungsgemäßen Lordosekissens gemäß eines ersten Ausführungsbeispiels in einem ausgebreiteten Zustand in einer Draufsicht.
Fig. 2 eine schematische Darstellung eines erfindungsgemäßen Lordosekissens aus Fig. 1 in einer Seitenansicht.
Fig. 3 eine schematische Darstellung eines erfindungsgemäßen Lordosekissens gemäß eines zweiten Ausführungsbeispiels in einem zusammengefalteten Zustand.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale, X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

Das Lordosekissen 1 ist aus einer Trägerfolie 11 und einer Polsterfolie 10 gebildet, die miteinander unter Ausbildung einer ersten aufblasbaren Polsterkammer 12 und einer zweiten aufblasbaren Polsterkammer 14 und einer dritten aufblasbaren Polsterkammer 15 sowie eines die Polsterkammern 12, 14, 15 jeweils beabstandenden Stegs 16 verschweißt sind. Die erste Polsterkammer 12, die zweite Polsterkammer 14 und die dritte Polsterkammer 15 sind jeweils mit einer in die Polsterkammern 12, 14, 15 einmündenden Fluidleitung 13 verbunden. Die Stege 16 weisen jeweils zwei in einer Querrichtung Y verlaufende Falzen 18 auf, die durch eine Perforation gebildet ist. Die führt zu einer Verringerung der Steifigkeit des Stegs und bildet eine Sollknickstelle, um die das Lordosekissen 1 entlang der Perforation auf sich selbst gefaltet, umgeschlagen oder geknickt werden kann.

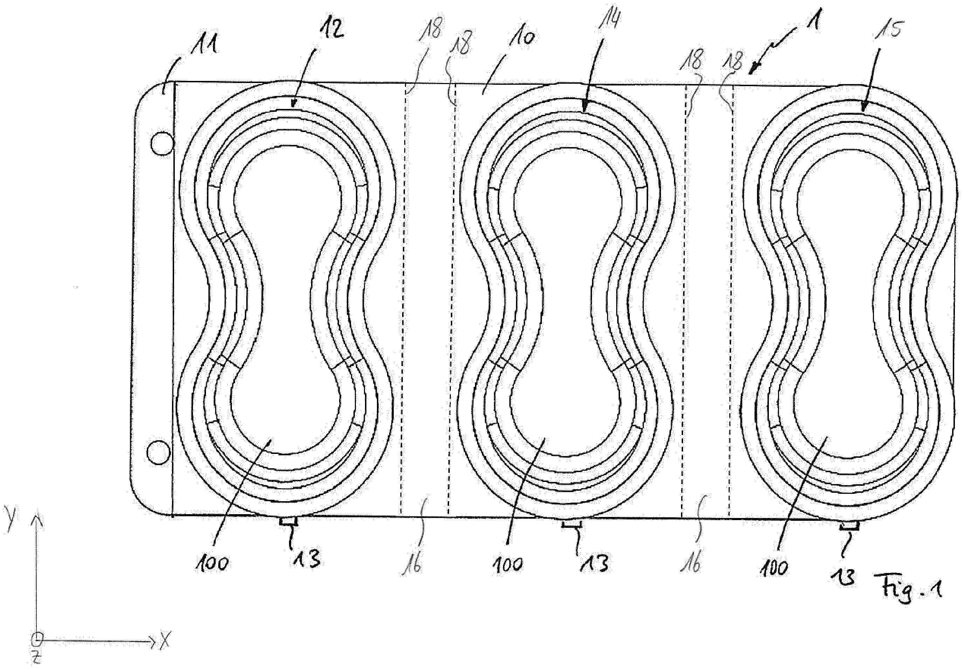

Die Polsterfolie 10 ist aus einer im Spritzgussverfahren dreidimensional geformten thermoplastischen Kunststofffolie gebildet, wobei die im verwendeten Spritzgusswerkzeuges vorgegebene dreidimensionale Form so gewählt ist, dass in die Polsterfolie 10 im dargestellten Ausführungsbeispiel der Fig. 1 drei identisch zueinander ausgebildete und in Längsrichtung X in gleichen Abständen nebeneinander angeordnete Polsterkammern 12, 14, 15 eingeformt sind. Deren vorgegebene dreidimensionale Geometrie auf der dem Körper eines Benutzers zugewandten Seite ist in der Draufsicht betrachtet an eine liegende Acht angenähert, die zweistufig ausgeformt ist, was der gewünschten Ergonomie gerecht wird und den möglichen Sitzkomfort steigert. Selbstverständlich können jedoch auch vollkommen andere Formgebungen durch die Herstellung der Polsterfolie 10 im Spritzgussverfahren aus einer dreidimensional geformten Kunststofffolie vorgegeben werden. Diese dreidimensional vorgeformte Polsterfolie 10 wird entlang ihrer Umfangsränder und in den Bereichen zwischen den einzelnen ausgeformten Polsterkammern 12, 14, 15 mit der rückwärtig angeordneten Trägerfolie 11 abdichtend verschweißt, wobei vor dem Verschweißen jeweils eine in die einzelnen Polsterkammern 12, 14, 15 einmündende Fluidleitung 13 in Form eines mit der Trägerfolie 11 und der Polsterfolie 10 verschweißbaren Schlauchabschnittes zwischen Trägerfolie 11 und Polsterfolie 10 eingelegt und gemeinsam mit diesen verschweißt wird. Anschließend wird das Lordosekissen 1 getempert, um die Einbauhöhe der ausgeformten Polsterkammern 12, 14, 15 an die vorgegebenen Einbauräume im vorgesehenen Sitz anzupassen. Darüber hinaus kann aufgrund der Herstellung der Polsterfolie 10 aus einer im Spritzgussverfahren dreidimensional geformten Kunststofffolie auch eine dem Benutzer zugewandte, d. h. der Trägerfolie 11 abgewandte Oberfläche 100 der Polsterfolie 10, insbesondere im Bereich der Polsterkammern 12, 14, 15 dreidimensional strukturiert sein, um den Komfort zu steigern und eine mögliche Massagefunktion zu unterstützen. Gleichermaßen kann anstelle einer zweidimensionalen, flachen Trägerfolie 11 auch eine ebenfalls dreidimensional geformte Kunststofffolie zur Ausbildung der Trägerfolie 11 verwendet werden, um beispielsweise eine Anpassung des Lordosekissens 1 an den vorgesehenen Sitzaufbau zu realisieren. Das vorangehend erläuterte Lordosekissen 1 sowie das Verfahren zu dessen Herstellung ermöglichen es, für jeden beliebigen Sitztyp ein optimales Lordosekissen angepasst an die Sitzkonstruktion und den Nutzer zu konstruieren und herzustellen. Eine Kombination verschiedener Lordosekissen 1 nach Art eines Baukastens ist ebenfalls möglich und es können verschiedenste kundenspezifische Geometrie umgesetzt werden.

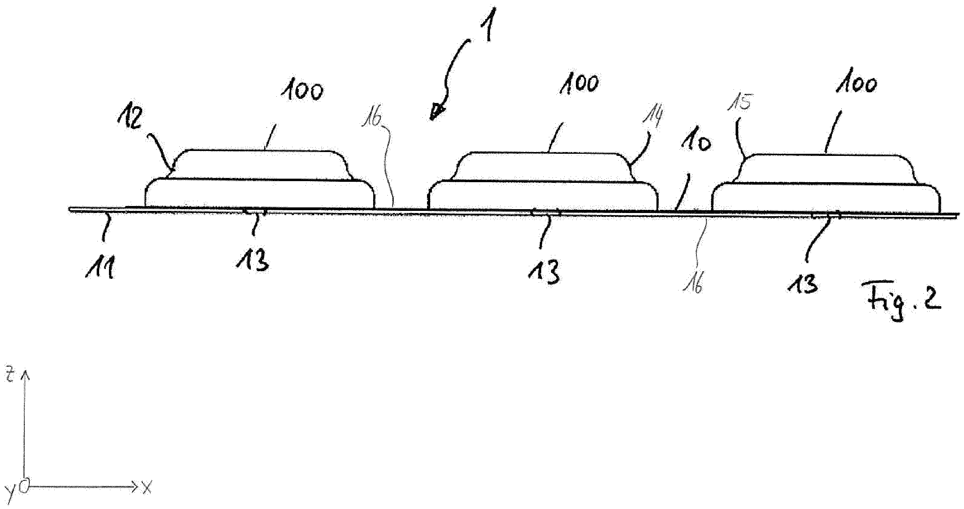

Figur 2 zeigt das Lordosekissen 1 aus dem Ausführungsbeispiel der Figur 1 in einer Seitenansicht. Dargestellt ist insbesondere die dreidimensionale Ausgestaltung der ersten Polsterkammer 12, der zweiten Polsterkammer 14 und der dritten Polsterkammer 15 im aufgeblasenen bzw. expandierten Zustand.

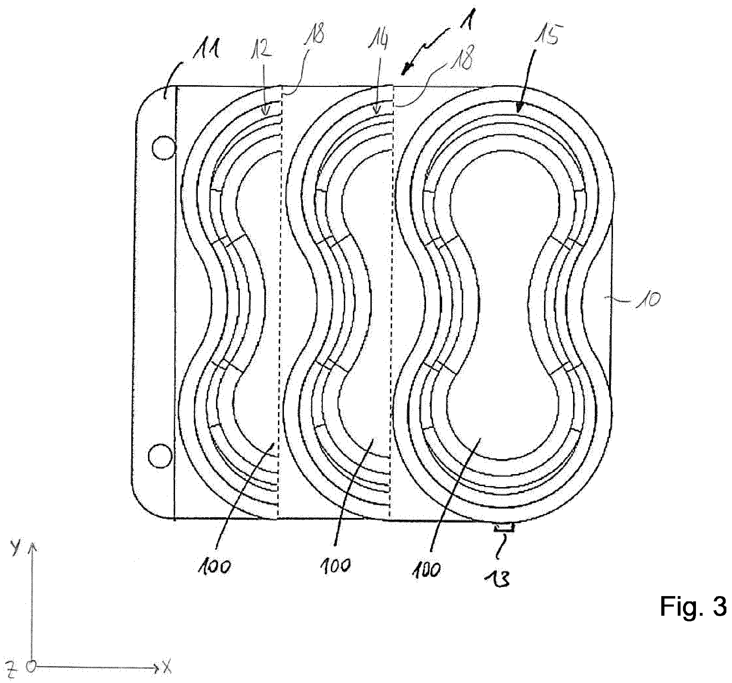

In Figur 3 zeigt das Lordosekissen 1 gemäß eines zweiten Ausführungsbeispiels in einem zusammengefalteten Zustand. Das Lordosekissen 1 ist im Vergleich zu dem Ausführungsbeispiel aus Figur 1 entlang der Falzen 18 gefaltet, umgeschlagen oder geknickt worden, sodass die erste Polsterkammer 12 und die zweite Polsterkammer 14, sowie die zweite Polsterkammer 14 und die dritte Polsterkammer 15 einander teilweise überlappend angeordnet sind. Hierbei ist die Orientierung bzw. Ausrichtung der Polsterkammern 12, 14, 15 in vertikaler Richtung Z im zusammengefalteten Zustand des Lordosekissens 1 identisch mit dem ursprünglichen Zustand vor dem Zusammenfalten. Mit anderen Worten ist im zusammengefalteten Zustand der Steg 16, welcher die erste Polsterkammer 12 mit der zweiten Polsterkammer 14 verbindet, auf der Oberfläche 100 der ersten Polsterkammer 12 angeordnet. Der Steg 16, welcher die zweite Polsterkammer 14 mit der dritten Polsterkammer 15 verbindet, ist auf der Oberfläche 100 der zweiten Polsterkammer 14 angeordnet. Die zweite Polsterkammer 14 ist im zusammengefalteten Zustand mit der Unterseite auf dem Steg 16 angeordnet, welcher die erste Polsterkammer 12 mit der zweiten Polsterkammer 14 verbindet. Die dritte Polsterkammer 15 ist im zusammengefalteten Zustand mit der Unterseite auf dem Steg 16 angeordnet, welcher die zweite Polsterkammer 14 mit der dritten Polsterkammer 15 verbindet. Mit anderen Worten ist die Hubrichtung der Polsterkammern 12, 14, 15 im zusammengefalteten Zustand des Lordosekissens 1 gleichgerichtet.

### Bezugszeichenliste (Teil der Beschreibung)

- 1: Lordosekissen
- 10: Polsterfolie
- 11: Trägerfolie
- 12: Erste Polsterkammer
- 13: Fluidleitung
- 14: Zweite Polsterkammer
- 15: Dritte Polsterkammer
- 16: Steg
- 18: Falz
- 100: Oberfläche

- X: Längsrichtung
- Y: Querrichtung
- Z: vertikale Richtung
- X, Y: Horizontalen; horizontale Ebene

## Patentansprüche

1. Lordosekissen (1), umfassend eine Polsterfolie (10) und eine Trägerfolie (11), die miteinander unter Ausbildung mindestens einer ersten aufblasbaren Polsterkammer (12) und einer zweiten aufblasbaren Polsterkammer (14) und wenigstens eines die Polsterkammern (12, 14) beabstandenden Stegs (16) verschweißt sind, wobei die erste Polsterkammer (12) und die zweite Polsterkammer (14) jeweils mit einer in diese einmündenden Fluidleitung (13) verbunden sind,
**dadurch gekennzeichnet, dass**
der Steg (16) wenigstens eine in einer Querrichtung (Y) verlaufende Falz (18) aufweist, wobei das Lordosekissen (1) entlang der Falz (18) faltbar ist.

2. Lordosekissen (1) nach Anspruch 1,
**dadurch gekennzeichnet, dass**
der Steg (16) zwei in Querrichtung (Y) verlaufende Falzen (18) aufweist.

3. Lordosekissen (1) nach einem der vorhergehenden Ansprüche,
**dadurch gekennzeichnet, dass**
die Polsterfolie (10) und / oder die Trägerfolie (11) aus einer in einem Spritzgussverfahren dreidimensional geformten Kunststofffolie gebildet ist.

4. Lordosekissen (1) nach einem der vorhergehenden Ansprüche,
**dadurch gekennzeichnet, dass**
die Polsterfolie (10) eine dreidimensional strukturierte Oberfläche (100) aufweist.

5. Lordosekissen (1) nach einem der vorhergehenden Ansprüche,
**dadurch gekennzeichnet, dass**
das Lordosekissen (1) entlang der Falz (18) eine Perforation oder eine Materialanhäufung aufweist.

6. Verfahren zur Herstellung eines Lordosekissens (1), **gekennzeichnet durch** die folgenden Verfahrensschritte:
a) Bereitstellen einer Polsterfolie (10) und einer Trägerfolie (11),
b) Verschweißen der Polsterfolie (10) und der Trägerfolie (11) miteinander, unter Ausbildung mindestens einer ersten aufblasbaren Polsterkammer (12) und einer zweiten aufblasbaren Polsterkammer (14) und wenigstens eines die Polsterkammern (12, 14) beabstandenden Stegs (16),
mit jeweils einer in die erste Polsterkammer (12) und die zweite Polsterkammer (14) einmündenden Fluidleitung (13),
c) Falten des Lordosekissens (1) entlang wenigstens einer in einer Querrichtung (Y) verlaufenden Falz (18) des Stegs (16),
c) Tempern des Lordosekissens (1).

7. Verfahren nach Anspruch 6,
**dadurch gekennzeichnet, dass**
die Polsterfolie (10) und / oder die Trägerfolie (11) aus einer im Spritzgussverfahren dreidimensional geformten Kunststofffolie gebildet ist.

8. Verfahren nach einem der Ansprüche 6 bis 7,
**dadurch gekennzeichnet, dass**
die Polsterfolie (10) eine dreidimensional strukturierte Oberfläche (100) aufweist.

9. Verfahren nach einem der Ansprüche 6 bis 8,
**dadurch gekennzeichnet, dass**
der Steg (16) zwei in Querrichtung (Y) verlaufende Falzen (18) aufweist.

10. Verfahren nach einem der Ansprüche 6 bis 9,
**dadurch gekennzeichnet, dass**
das Lordosekissen (1) entlang der Falz (18) eine Perforation oder eine Materialanhäufung aufweist.
